# EUROPEAN PATENT APPLICATION

(11) **EP 1 635 054 A2**
(43) Date of publication of application: **15.03.2006**
(21) Application number: 05108412.7
(22) Date of filing: 14.09.2005
(51) Int. Cl.: F02K 9/34, F02K 9/38

(54) **Solid-propellant engine casing, and solid-propellant engine featuring such a casing**

(30) Priority: 14.09.2004 IT TO20040620
(71) Applicant: AVIO S.p.A., 10135 TORINO (IT)
(72) Inventor: Betti, Francesco, 00187 ROMA (IT); Ciranna, Massimo, 00131 ROMA (IT)
(74) Representative: Jorio, Paolo

(57) **Abstract**

In a solid-propellant engine (1), a casing (2), defining a chamber (4) for a mass of solid propellant (5) ignitable to produce a stream of propulsion gas, has at least one wall (10, 31, 32) made of plastic material and having a degradation temperature lower than the autoignition temperature of the propellant and higher than the maximum operating temperature of the engine (1).

## Description

The present invention relates to a solid-propellant rocket engine casing.

As is known, a solid-propellant engine comprises a casing housing the propellant and defining a combustion chamber; a propellant ignition device; and one or more nozzles for producing the propulsive thrust upon combustion of the propellant.

Commonly used solid propellants have critical or limit temperatures, above which they become instable and ignite spontaneously. In the event of an accidental thermal stimulus causing some area of the propellant to reach the critical temperature, the propellant may ignite spontaneously and uncontrollably, and, if the force of the reaction is not reduced by reducing restriction, explosive reactions may occur with devastating consequences. To ensure safe handling, transport, storage and stowing of the engines, the casings must be designed to prevent explosive reactions caused by external thermal stimuli to which the engine may be exposed accidentally. In other words, when exposed to an external thermal stimulus capable of heating it beyond autoignition temperature, the propellant must be releasable from "confinement" by the casing, so that it simply "burns freely" with no explosive reaction.

For this reason, known casings are normally equipped with temperature sensors, which, in the presence of thermal stimuli endangering the stored propellant, activate mechanical cutting or pyrotechnic devices, which form openings or actual cuts in the casing, through which the propellant communicates with the outside and begins burning freely with no danger of explosion. The presence of sensors and/or cutting devices, however, makes the casing expensive, heavy, and, above all, unreliable in the long term.

Alternatively, casings are known to be formed by joining a number of separate metal parts, which, only upon ignition, are locked firmly to confine the propellant. In such casings, the various parts are known, for example, to be connected by mechanical fastening devices, which, however, greatly complicate production and increase the weight and cost of the casing.

Along the same lines, casings are also known to be formed using glued strips of metal material. The gripping power of the glues employed is nil within a given temperature range, at which they release the metal strips to allow the propellant to communicate with the outside and burn freely. Solutions of this sort, however, involve complex, time-consuming forming operations, and so fail to provide for reducing the manufacturing cost of the casing.

Apart from this, using glued metal strips makes it practically impossible to form external appendixes or attachment portions, which are indispensable for handling the casing and attaching external members, such as stabilizing fins, hooks, etc.

It is an object of the present invention to provide a solid-propellant engine casing designed to provide a straightforward, low-cost solution to the aforementioned drawbacks.

According to the present invention, there is provided a casing of a solid-propellant engine, the casing comprising a chamber for housing a mass of solid propellant; and at least one first and at least one second opening for respectively igniting said propellant and expelling the gases produced by combustion of the propellant; and being characterized by also comprising at least one wall made of plastic material and having a degradation temperature lower than the autoignition temperature of said propellant and higher than the maximum operating temperature of the engine.

Conveniently, said plastic material is a thermoplastic or thermosetting material.

A non-limiting embodiment of the invention will be described by way of example with reference to the accompanying drawings, in which:
Figure 1 shows a view in perspective, with parts removed for clarity, of a preferred embodiment of the solid-propellant engine featuring a casing in accordance with the teachings of the present invention;
Figures 2 and 3 show sections of two details of Figure 1.

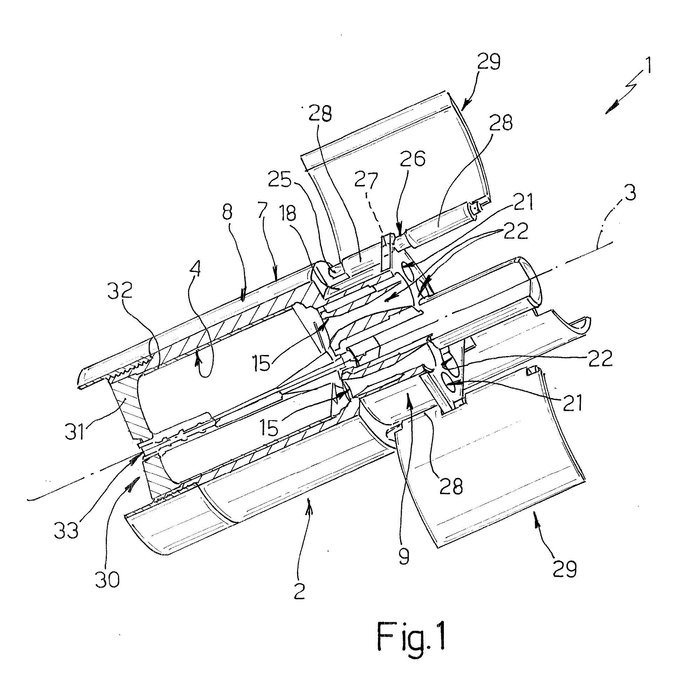

Number 1 in Figure 1 indicates as a whole a solid-propellant rocket engine. Engine 1 comprises an outer casing 2 having an axis 3 of symmetry and defining a chamber 4 for housing solid propellant 5. Casing 2 is made entirely of plastic material, in particular a thermoplastic material, e.g. acrylonitrile butadiene styrene polymers, or an acrylonitrile styrene copolymer, or ASA (SAN modified with elastomeric acrylic ester), or a thermosetting material, e.g. epoxy resins or polyester, all reinforced or not with glass or carbon fibre. Casing 2 has a degradation temperature lower than the autoignition temperature of propellant 5 and within a range higher than the maximum operating temperature of the engine. "Degradation temperature" is intended to mean the temperature above which the physical and/or chemical characteristics of the plastic material are degraded with respect to those in the engine operating temperature range, i.e. the temperature above which the material softens, so that casing 2 yields when pressurized internally by accidental ignition of the propellant. One example is a plastic material having a degradation temperature of 100-150°C, when the propellant 5 employed has an autoignition temperature of about 170°C, and the maximum operating temperature of the engine is 70°C.

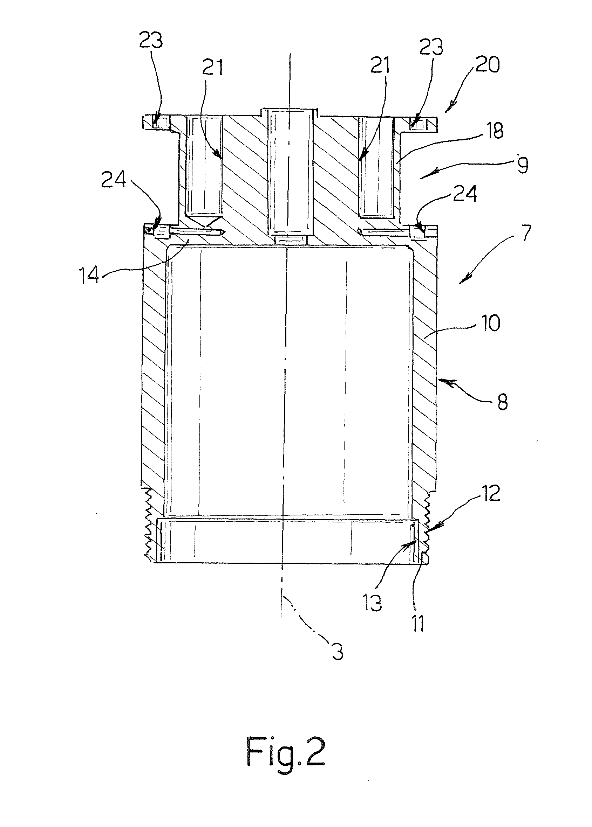

In the example described, casing 2 comprises a one-piece main body 7 (Figure 2), in turn comprising a cup-shaped portion 8 and a connecting portion 9 aligned along axis 3. More specifically, cup-shaped portion 8 comprises a cylindrical lateral wall 10 coaxial with axis 3, and a free end portion 11 of which has an external thread 12 and an internal thread 13. Cup-shaped portion 8 also comprises an end wall 14, in which are formed a number of through openings 15 (Figure 1) distributed on wall 14 and through which flow, in use, the exhaust gases produced by combustion of propellant 5 in chamber 4. On the opposite side to cylindrical wall 10, a cylindrical portion 18 of connecting portion 9 extends from end wall 14, terminates with a quadrangular outer flange 20, and comprises a number of dead conduits 21, and, for each opening 15, a corresponding contoured exhaust gas conduit or nozzle 22. Flange 20 has a number of axial through holes 23 (Figure 2), each of which is formed near an outer edge of flange 20 and in correspondence with a respective dead hole 24 formed in end wall 14 and housing an end portion 25 of a hinge pin 26, an intermediate portion 27 of which engages corresponding hole 23 and extends through a through hole in a fastening piece 28 of a respective known stabilizing fin 29 forming part of engine 1 and not described in detail. Interfaces for parts of the rocket outside the engine are connected to portion 9.

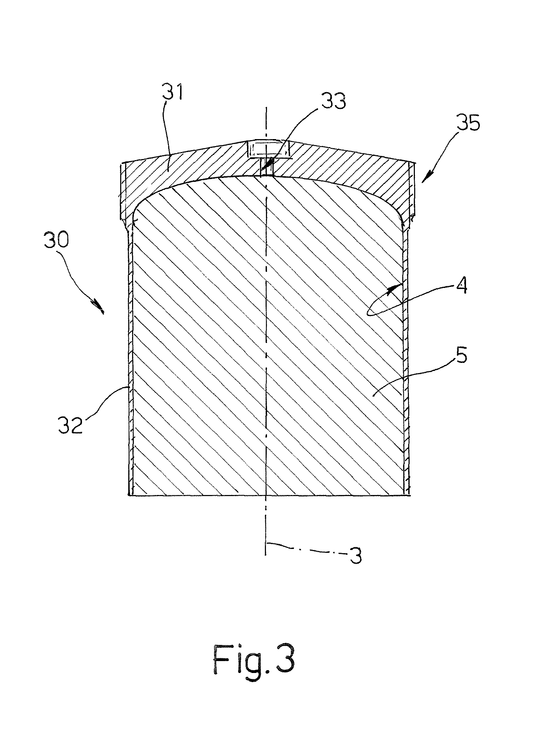

With reference to the accompanying drawings, and particularly Figure 3, casing 2 also comprises a cartridge 30 for housing propellant 5. Like portion 8, cartridge 30 is cup-shaped, and comprises an end wall 31; and a lateral wall 32 thinner than end wall 31 and wall 10, and for containing the propellant as it is poured. End wall 31 closes the casing to form combustion chamber 4, and has a through hole 33 coaxial with axis 3 and housing the ignition system for igniting propellant 5 by means of a known igniter (not shown); and an outer peripheral portion 35 threaded to engage thread 13 of portion 11. Alternatively, cartridge 30 is welded to portion 11 or to a different portion of portion 8.

Casing 2 is formed by first depositing propellant 5 inside cartridge 30. Once the propellant sets, or at a later time, cartridge 30 is inserted inside cup-shaped portion 8 and screwed to portion 11 to connect the two parts firmly and define propellant combustion and containment chamber 4.

Once the casing is assembled, should external thermal stimuli cause the temperature to exceed said degradation temperature, the plastic parts of casing 2 yield to form a preferential path connecting chamber 4 to the outside, so that propellant 5 burns freely with no explosive reactions.

As will be clear from the foregoing description, unlike known solutions, using a plastic material degradable at a given temperature or within a predetermined temperature range, to prevent the propellant exploding, provides for achieving a casing which, on the one hand, is just as efficient and reliable as known casings - seeing as, with external temperatures below the degradation temperature of the casing material, the casing performs in the same way as other casings, with its physical characteristics remaining unchanged - and, on the other, is sure to yield and therefore of guaranteed efficiency and dependability, even when exposed accidentally to external thermal stimuli would certainly cause the propellant to explode if confined. Moreover, such efficiency and reliability are achieved with no need for additional or dedicated devices, such as cutting and pyrotechnic devices, and/or with no need for unreliable joints involving complex manufacturing processes and testing, i.e. with no need for complex, high-cost manufacturing solutions.

Moreover, in direct contrast to known solutions, using plastic material and none of the above additional devices provides, on the one hand, for greatly reducing both the overall weight and manufacturing cost of the engine - the plastic materials being easily molded - and, on the other, for easily forming connecting members or brackets and/or supports for other engine parts.

Integrating the cartridge in a casing cover simplifies pouring of the propellant, which is poured into a straightforward cup-shaped body, heating of the propellant, and assembly of the casing, which may be assembled as soon as the propellant is set or at a later time. The cartridge, in fact, is simply inserted and screwed inside the supporting body, and may therefore be formed and subsequently stowed with no risk of detonation, by being open at one end.

Clearly, changes may be made to casing 2 as described herein without, however, departing from the scope of the present invention. In particular, the cup-shaped portion defining cartridge 30 may be replaced by a cap or by end wall 31 only of cartridge 30, which are also screwed, welded, or otherwise connected firmly to wall 10 of body 7, once the propellant is positioned inside body 7.

Moreover, only cartridge 30 or the cap or main body 7 may be made of plastic material, the other parts being made of different materials.

Finally, the component parts of the casing may differ in shape and size from those described by way of example.

## Claims

1. A casing (2) of a solid-propellant engine (1), the casing (2) comprising a chamber (4) for housing a mass of solid propellant; and at least one first (33) and at least one second (15) opening for respectively igniting said propellant and expelling the gases produced by combustion of the propellant; and being **characterized by** also comprising at least one wall (10)(14)(31) made of plastic material and having a degradation temperature lower than the autoignition temperature of said propellant and higher than the maximum operating temperature of the engine (1).

2. A casing as claimed in Claim 1, **characterized in that** said plastic material is a thermoplastic or thermosetting material.

3. A casing as claimed in any one of the foregoing Claims, **characterized by** comprising a first cup-shaped portion (8), in an end wall (14) of which said second opening (15) is formed; and a closing portion (31) (32) for closing said first cup-shaped portion (8); connecting means (13, 35) being provided for connecting said first cup-shaped portion (8) and said closing portion (31)(32) integrally to each other; and at least one of said portions being made of said plastic material.

4. A casing as claimed in Claim 3, **characterized in that** said first cup-shaped portion (8) and said closing portion (31)(32) are both made of said plastic material.

5. A casing as claimed in Claim 3 or 4, **characterized in that** said closing portion (31)(32) forms part of a cartridge (30) for containing said propellant.

6. A casing as claimed in one of Claims 3 to 5, **characterized in that** said closing portion comprises a second cup-shaped portion (30) housing said propellant and which is inserted inside said first cup-shaped portion (8); said second cup-shaped portion comprising an end wall (31) having said first opening (33).

7. A casing as claimed in one of Claims 3 to 6, **characterized in that** said connecting means comprise a first threaded portion (13) on said first cup-shaped portion; and a second threaded portion on said closing portion (31) and screwed to said first threaded portion (13) .

8. A casing as claimed in any one of Claims 3 to 7, **characterized in that** said connecting means comprise a weld between said first cup-shaped portion (8) and said closing portion (31)(32).

9. A casing as claimed in one of Claims 3 to 8, **characterized by** comprising a number of outer connecting portions (9)(20) carried by said first cup-shaped portion (8) .

10. A casing as claimed in Claim 9, **characterized in that** said first cup-shaped portion (8) and said outer connecting portions (9)(20) form part of a one-piece body (7).

11. A solid-propellant engine comprising a casing (2) defining a chamber (4), for housing and combustion of the solid propellant, and as claimed in any one of the foregoing Claims.
